# EUROPÄISCHE PATENTSCHRIFT

(11) **EP 3 392 094 B1**
(45) Veröffentlichungstag und Bekanntmachung des Hinweises auf die Patenterteilung: **09.06.2021**
(21) Anmeldenummer: 18167160.3
(22) Anmeldetag: 13.04.2018
(51) Int. Cl.: B60R 25/0215

(54) **VORRICHTUNG ZUM SPERREN UND FREIGEBEN EINES FUNKTIONSWESENTLICHEN BAUTEILS EINES KRAFTFAHRZEUGES**
DEVICE FOR LOCKING AND UNLOCKING AN ESSENTIAL COMPONENT OF A MOTOR VEHICLE
DISPOSITIF DE BLOCAGE ET DÉBLOCAGE D'UN COMPOSANT ESSENTIEL AU FONCTIONNEMENT D'UN VÉHICULE AUTOMOBILE

(30) Priorität: 19.04.2017 DE 102017108247
(43) Veröffentlichungstag der Anmeldung: 24.10.2018
(73) Patentinhaber: HUF Hülsbeck & Fürst GmbH & Co. KG, 42551 Velbert (DE)
(72) Erfinder: ZILLMANN, Horst, 81243 München (DE)
(74) Vertreter: Bals, Rüdiger

(56) Entgegenhaltungen:
- EP-A1- 1 232 921
- EP-A1- 2 572 945
- EP-A2- 1 176 065
- WO-A1-2004/098959
- WO-A1-2004/098960
- WO-A1-2009/074543

## Beschreibung

Die Erfindung betrifft eine Vorrichtung zum Sperren und Freigeben eines funktionswesentlichen Bauteils eines Kraftfahrzeugs, bspw. einer Lenksäule oder eines Gangschalthebels, nach dem Oberbegriff des unabhängigen Vorrichtungsanspruches und ein Verfahren zum Antreiben einer solchen Vorrichtung nach dem Oberbegriff des unabhängigen Verfahrensanspruches.

Vorrichtungen zum Sperren und Freigeben von funktionswesentlichen Bauteilen in Kraftfahrzeugen sind grundsätzlich bekannt und werden bspw. zum Sperren von Lenksäulen oder Gangschalthebeln eingesetzt. Solche Vorrichtungen weisen meistens einen bewegbar gelagerten Sperrbolzen auf, welcher mithilfe eines Getriebes zwischen einer Verriegelungsposition zum Verriegeln des funktionswesentlichen Bauteils und einer Entriegelungsposition zum Entriegeln des funktionswesentlichen Bauteils überführt wird. Oft wird das Getriebe zum Antreiben eines Schieberelementes eingesetzt, welches einen Signalgeber trägt und zum Detektieren mindestens einer Position des Sperrbolzens dient. Das Getriebe weist zum Antreiben des Schieberelementes grundsätzlich eine als Zwangsführung ausgebildete Kulissenscheibe auf, in welcher ein Führungspin des Schieberelementes zwangsgeführt wird. Dabei kann es jedoch vorkommen, dass ein Abbrechen des Führungspins die Zwangsführung aufhebt, sodass das Schieberelement die Wirkverbindung zum Getriebe verliert und in einer seiner Stellungen verharrt. Als Folge wird die Position des Sperrbolzens nicht zuverlässig erkannt

WO 2004/098959 A1 offenbart eine Vorrichtung zum Sperren der Lenkspindel eines Kraftfahrzeugs.

Es ist daher Aufgabe der vorliegenden Erfindung, eine Vorrichtung der vorstehend genannten Art zu verbessern. Insbesondere ist es Aufgabe der Erfindung, eine Vorrichtung zum Sperren und Freigeben eines funktionswesentlichen Bauteils eines Kraftfahrzeugs, bspw. einer Lenksäule oder eines Gangschalthebels, bereitzustellen, die einfach aufgebaut ist, die leicht zu montieren ist, die zuverlässig und sicher im Betrieb ist und die eine zuverlässige Erkennung mindestens einer Position des Sperrbolzens ermöglicht. Zudem ist es Aufgabe der Erfindung ein entsprechendes Verfahren zum Antreiben einer Vorrichtung zum Sperren und Freigeben eines funktionswesentlichen Bauteils eines Kraftfahrzeugs bereitzustellen.

Die vorliegende Aufgabe wird durch eine Vorrichtung mit den Merkmalen des unabhängigen Vorrichtungsanspruchs, insbesondere aus dem kennzeichnenden Teil, gelöst. Ferner wird die erfindungsgemäße Aufgabe durch ein Verfahren zum Antreiben einer Vorrichtung zum Sperren und Freigeben eines funktionswesentlichen Bauteils eines Kraftfahrzeugs mit den Merkmalen des unabhängigen Verfahrensanspruchs, insbesondere aus dem kennzeichnenden Teil, vorgeschlagen. In den abhängigen Vorrichtungs- und Verfahrensansprüchen sind bevorzugte Weiterbildungen der Erfindung aufgeführt. Merkmale, die zu den einzelnen Ausführungsformen der erfindungsgemäßen Sperrvorrichtung und des erfindungsgemäßen Verfahrens offenbart werden, können in der Weise miteinander kombiniert werden, dass bezüglich der Offenbarung zu den Ausführungsformen der erfindungsgemäßen Vorrichtung und des erfindungsgemäßen Verfahrens stets wechselseitig Bezug genommen wird bzw. werden kann.

Die Erfindung stellt eine Vorrichtung zum Sperren und Freigeben eines funktionswesentlichen Bauteils eines Kraftfahrzeuges, insbesondere einer Lenksäule oder eines Gangschalthebels, bereit, aufweisend einen zwischen einer Verriegelungsposition zum Verriegeln des funktionswesentlichen Bauteils und einer Entriegelungsposition zum Entriegeln des funktionswesentlichen Bauteils bewegbar gelagerten Sperrbolzen, ein Getriebe, welches mit dem Sperrbolzen in mechanischer Wirkverbindung steht, um den Sperrbolzen zwischen der Verriegelungsposition und der Entriegelungsposition zu überführen, und eine Detektionseinheit, welche ein Schieberelement zum Bewegen eines Signalgebers und mindestens ein erstes ortsfestes Sensorelement zum Detektieren mindestens einer Stellung des Schieberelementes aufweist, wobei das Schieberelement mit dem Getriebe in mechanischer Wirkverbindung steht, um das Schieberelement zwischen einer Ruhestellung, in welcher sich der Signalgeber beabstandet vom ersten Sensorelement befindet, und einer Detektionsstellung, in welcher sich der Signalgeber im Detektionsbereich des ersten Sensorelementes befindet, zu überführen. Hierzu ist es erfindungsgemäß vorgesehen, dass die Detektionseinheit ein Federelement aufweist, um das Schieberelement mit einer Federkraft aus der Ruhestellung in die Detektionsstellung zu beaufschlagen.

Im Rahmen der Erfindung wird eine Vorrichtung zum Sperren und Freigeben eines funktionswesentlichen Bauteils eines Kraftfahrzeuges, insbesondere einer Lenksäule oder eines Gangschalthebels, bereitgestellt, welche mithilfe eines, vorzugsweise längsverschieblichen, Schieberelementes zwei Funktionalitäten zur Verfügung stellt. Zum einen trägt das Schieberelement einen Signalgeber, bspw. einen Magnet, welcher mit dem Schieberelement hin und her verschiebbar ist. Der Signalgeber kann bspw. einen Südpol mit zwei benachbarten Nordpolen aufweisen. Die Erkennung mithilfe zugehöriger Sensorelemente erlaubt es, die Stellung des Schieberelementes und damit indirekt auch die Position des Sperrbolzens zu bestimmen. Eine weitere Funktionalität des Schieberelementes ist ein mechanisches Einrasten des Schieberelementes in einer korrespondierenden Ausnehmung am Sperrbolzen in seiner Entriegelungsposition. Das Getriebe kann dabei eine zum Teil als eine Zwangsführung ausgebildete Führungskulisse aufweisen, um das Schieberelement zwischen der Ruhestellung und der Detektionsstellung zum Eingriff mit dem Sperrbolzen zu verschieben.

Erfindungsgemäß ist ein Federelement vorgesehen, um das Schieberelement mit einer Federkraft aus der Ruhestellung in die Detektionsstellung zu beaufschlagen, um sicherzustellen, dass das Schieberelement die Detektionsstellung sicher erreicht. Somit kann verhindert werden, dass das Schieberelement in einer Zwischenstellung verharrt. Sogar in Situationen, in denen das Schieberelement die Wirkverbindung zum Getriebe bzw. zur Führungskulisse verliert, bspw. wenn ein zugehöriger Führungspin des Schieberelementes abbricht, sorgt das Federelement dafür, dass das Schieberelement seine Detektionsstellung trotzdem erreicht. In der Detektionsstellung des Schieberelementes wird zum einen eine entsprechende Position des Sperrbolzens, insbesondere die Entriegelungsposition des Sperrbolzens, zuverlässig erkannt und zum anderen der Sperrbolzen in seiner Entriegelungsposition mechanisch abgesichert bzw. arretiert. Mechanische Absicherung des Sperrbolzens in der Entriegelungsposition dient vorteilhafterweise dazu, dass der Sperrbolzen zuverlässig auf Abstand zum funktionswesentlichen Bauteil gehalten wird und dadurch das funktionswesentliche Bauteil zum Betrieb des Kraftfahrzeuges freigibt. Somit kann verhindert werden, dass der Sperrbolzen während der Fahrt des Kraftfahrzeuges die Entriegelungsposition verlässt und das funktionswesentliche Bauteil ungewollt blockiert. Die Entriegelungsposition des Sperrbolzens soll dabei sicher detektiert werden, damit die Elektronik des Kraftfahrzeuges im Betrieb des Kraftfahrzeuges entsprechend angesteuert wird und nicht ungewollt ausfällt.

Der Erfindungsgedanke liegt mit anderen Worten darin, eine zweifache Absicherung bei der Überführung des Schieberelementes aus der Ruhestellung in die Detektionsstellung bereitzustellen. Wenn das Getriebe mit dem Schieberelement fehlerfrei mechanisch wechselwirken, so stellt das Federelement eine redundante Maßnahme dar. Sollte jedoch das Schieberelement die mechanische Verbindung zum Getriebe verlieren, so sorgt das Federelement dazu, dass das Schieberelement trotz mechanischer Unterbrechungen in der Antriebskette seine Detektionsstellung sicher erreicht. Zurück in die Ruhestellung kann das Schieberelement dann nicht durch das Getriebe, aber ggf. durch den Sperrbolzen entgegen der Wirkung der Federkraft herausgedrückt werden.

Mithilfe einer Federbelastung wird folglich sichergestellt, dass der Sperrbolzen in der Entriegelungsposition durch das erfindungsgemäße federbelastete Schieberelement zuverlässig erreicht wird und die Sensorik die Entriegelungsposition des Sperrbolzens in einer sicheren Weise erkennt. Folglich werden eine exakte und fehlerfreie Detektion der Entriegelungsposition des Sperrbolzens erreicht und ein mit hoher Sicherheit ausgestaltetes zugehöriges Sensorsignal erzeugt.

Ferner kann im Rahmen der Erfindung vorgesehen sein, dass das Schieberelement translatorisch, vorzugsweise entlang einer Richtung, die sich im Wesentlichen quer zu einer Hubrichtung des Sperrbolzens erstreckt, bewegbar gelagert ist. Durch die translatorische Bewegung kann das Schieberelement stabil angetrieben werden. Quer zur Hubrichtung des Sperrbolzens lässt sich eine zuverlässige Arretierung des Sperrbolzens in der Entriegelungsposition erreichen. Zudem kann durch eine translatorische Bewegung des Sperrbolzens entlang der Hubrichtung und des Schieberelementes quer zur Hubrichtung die entsprechenden Positionen des Sperrbolzens und die entsprechenden Stellungen des Schieberelementes einfach aufeinander abgestimmt werden.

Zudem kann die Erfindung vorsehen, dass das Getriebe ein Antriebsrad, bspw. in Form eines Schneckenrades, aufweisen kann, um eine Antriebswirkung von einem, vorzugsweise elektrischen, Antrieb abzugreifen und an den Sperrbolzen und/oder das Schieberelement bereitzustellen. Das Getriebe kann im Rahmen der Erfindung als ein Schneckengetriebe ausgebildet sein. Ein solches Getriebe ist vorteilhafterweise geräuscharm, weist eine hohe Belastbarkeit auf, ermöglicht hohe Übersetzungen zwischen einer Schnecke und einem Antriebsrad und kann außerdem selbsthemmend sein. Mithilfe eines Schneckengetriebes kann ein kleiner Antrieb ausreichen, um ein stabiles Antreiben des Sperrbolzens und/oder des Schieberelementes zu ermöglichen. Außerdem können mithilfe eines Schneckengetriebes sowohl der Sperrbolzen in seinen Endpositionen, als auch das Schieberelement in seinen Endstellungen zuverlässig gehalten werden, ohne die Gefahr die jeweilige Endposition und/oder Endstellung ungewollt zu verlassen.

Außerdem kann im Rahmen der Erfindung vorgesehen sein, dass das Schieberelement in der Ruhestellung sich beabstandet vom Sperrbolzen befindet und dass das Schieberelement in der Detektionsstellung den Sperrbolzen form- und/oder kraftschlüssig arretiert, wenn sich der Sperrbolzen in der Entriegelungsposition befindet. Somit kann die Funktionalität des Schieberelementes erweitert werden. Dabei kann das Schieberelement nicht nur zum Detektieren der Entriegelungsposition des Sperrbolzens eingesetzt werden, sondern auch als ein Sicherungs- bzw. Arretierelement agieren. Hierzu kann das Schieberelement einen Arretierabschnitt aufweisen, der in der Detektionsstellung des Schieberelementes in einer korrespondierenden Ausnehmung am Sperrbolzen eingreifen kann, die in der Entriegelungsposition des Sperrbolzens dem Arretierabschnitt gegenüberliegen kann. Somit kann mit einfachen Maßnahmen und mit nur wenigen Bauteilen die Funktionalität der erfindungsgemäßen Vorrichtung erweitert und eine kompakte sowie sichere Vorrichtung zum Sperren und Freigeben des funktionswesentlichen Bauteils bereitgestellt werden.

Weiterhin kann im Rahmen der Erfindung vorgesehen sein, dass der Signalgeber mindestens einen Permanentmagneten mit einer magnetischen Orientierung, vorzugsweise drei Permanentmagneten mit alternierenden magnetischen Orientierungen, aufweisen kann. Ein Permanentmagnet kann ein elektromagnetisches Signal erzeugen, ohne dass eine Energiequelle zum Erzeugen des Signals notwendig ist. Ein elektromagnetisches Signal eignet sich auf eine vorteilhafterweise für eine präzise Positionsbestimmung des Schieberelementes. Durch ein Verwenden von drei Permanentmagneten kann ein elektromagnetisches Signal mit einer hohen Auflösung bereitgestellt werden, welcher sogar mithilfe von günstigen Sensoren präzise erkannt werden kann. Darüber hinaus ist es denkbar, dass das erste Sensorelement mindestens einen, vorzugsweise zwei, Magnetfeldsensoren, bevorzugt Hallsensoren, aufweisen kann, um den Signalgeber im Detektionsbereich des ersten Sensorelementes zu erfassen. Magnetfeldsensoren, insbesondere Hallsensoren, haben den Vorteil, dass sie keine magnetischen Materialien erfordern, das zu messende Magnetfeld nicht verändern und sogar nicht bewegte Magnete zuverlässig erkennen. Im Rahmen der Erfindung kann das erste Sensorelement einen Magnetfeldsensor aufweisen, bspw. in Form eines Hallsensors mit einer 3D-Auslösung. Ein solches Sensorelement ist sehr präzise. Zudem kann das erste Sensorelement zwei Magnetfeldsensoren aufweisen, bspw. in Form von eindimensionalen Hallsensoren. Solche Sensoren sind kostengünstige Bauteile, die im Zusammenspiel eine präzise Detektion ermöglichen. Durch Verwenden von zwei Magnetfeldsensoren kann außerdem der Vorteil erreicht werden, dass trotz eines Ausfalls eines der Magnetfeldsensoren eine Messung durch den anderen Sensor dennoch möglich ist.

Des Weiteren kann im Rahmen der Erfindung vorgesehen sein, dass die Detektionseinheit mindestens ein zweites ortsfestes Sensorelement zum Detektieren mindestens einer weiteren Stellung des Schieberelementes aufweisen kann, wobei sich das Schieberelement insbesondere in der Ruhestellung im Detektionsbereich des zweiten Sensorelementes befinden kann, wobei das zweite Sensorelement vorzugsweise mindestens einen Magnetfeldsensor, bevorzugt einen Hallsensor, aufweisen kann. Somit kann eine aktive Erkennung nicht nur der Entriegelungsposition, sondern auch der Verriegelungsposition des Sperrbolzens ermöglicht werden. Die Überwachung und Detektion von beiden Endpositionen des Sperrbolzens hat den Vorteil, dass die Positionserfassung des Sperrbolzens präzisier und zuverlässiger erfolgen kann als bei der Überwachung nur einer Position, weil zum Auswerten mehr Daten vorliegen, die miteinander verglichen und somit verifiziert werden können.

Ferner kann im Rahmen der Erfindung vorgesehen sein, dass das Getriebe ein, vorzugsweise drehbar um eine Drehachse des Getriebes angetriebenes, Schaltelement mit einer, vorzugsweise wendelförmigen, Steuerkurve aufweist, welche mit einem korrespondierenden Steuermittel des Sperrbolzens zusammenwirkt, um eine Rotationsbewegung des Schaltelementes in eine translatorische Bewegung des Sperrbolzens entlang einer Hubrichtung zwischen der Verriegelungsposition und der Entriegelungsposition zu transformieren. Das Schaltelement kann dabei drehfest mit einem Antriebsrad des Getriebes verbunden sein und mit dem Antriebsrad rotieren. Die Steuerkurve des Schaltelementes kann sich wendelförmig bzw. schraubenförmig um die Drehachse des Antriebsrades erstrecken, die beim Drehen des Schaltelementes das Steuermittel des Sperrbolzens über die Höhe der Steuerkurve entlang einer Hubrichtung des Sperrbolzens nach oben und nach unten verlagert. Die Länge der Steuerkurve kann dabei größer als ein Hubweg sein, den der Sperrbolzen zwischen der Verriegelungsposition und der Entriegelungsposition ausführt. Über die Steuerkurve kann folglich die Antriebswirkung stabil auf den Sperrbolzen übertragen werden.

Weiterhin kann im Rahmen der Erfindung vorgesehen sein, dass das Getriebe eine, vorzugsweise kurvenartige bzw. spiralförmige, insbesondere drehbar um eine Drehachse des Getriebes angetriebene, Führungskulisse aufweist, die mit einem korrespondierenden Führungspin des Schieberelementes zusammenwirkt, um eine Rotationsbewegung der Führungskulisse in eine translatorische Bewegung des Schieberelementes zwischen der Ruhestellung und der Detektionsstellung, vorzugsweise entlang einer Richtung, die sich im Wesentlichen quer zu einer Hubrichtung des Sperrbolzens erstreckt, zu transformieren. Die Führungskulisse kann dabei an einem scheibenförmigen Element, welches drehfest mit einem Antriebsrad des Getriebes verbunden ist, oder direkt an einer Seite des Antriebsrades ausgebildet sein und sich im Wesentlichen spiralförmig um die Drehachse erstrecken. In der Führungskulisse kann der Führungspin des Schieberelementes geführt werden, wobei im inneren der Führungskulisse nahe an der Drehachse des Antriebsrades das Schieberelement nahe dem Sperrbolzen kommt und mit einem wachsenden Abstand von der Drehachse das Schieberelement sich vom Sperrbolzen entfernt. Die Länge der Führungskulisse kann dabei größer als ein Überführungsweg des Schieberelementes zwischen der Detektionsstellung und der Ruhestellung sein. Über die Form und die Länge der Führungskulisse kann eine stabile Übertragung der Antriebswirkung auf das Schieberelement erfolgen.

Des Weiteren kann im Rahmen der Erfindung vorgesehen sein, dass die Führungskulisse mit einem wachsenden Abstand zu einer Drehachse des Getriebes zuerst einen entlang der Führungskulisse beidseitig geschlossenen Führungsbereich, danach einen sich zu einer Seite der Führungskulisse öffnenden und insbesondere breiter werdenden Eintrittsbereich und danach einen entlang der Führungskulisse radial einseitig offenen Stützbereich für den Führungspin des Schieberelementes aufweist. Im Inneren der Führungskulisse kann der Führungspin zuverlässig durch den beidseitig geschlossenen bzw. zwangsgeführten Führungsbereich der Führungskulisse geführt werden. Der Eintrittsbereich kann vorteilhafterweise als ein Übergangsbereich zwischen dem Führungsbereich und dem radial einseitig offenen Stützbereich der Führungskulisse dienen. Bei einer Bewegung des Führungspins in der Führungskulisse von innen nach außen kann sich der Führungspin an einer Seite des Stützbereiches abstützen. Bei einer Bewegung des Führungspins in der Führungskulisse von außen nach innen kann der Eintrittsbereich dazu dienen, um den Führungspin einzufangen und in den beidseitig geschlossenen Führungsbereich zu überführen. Dadurch, dass der Stützbereich radial einseitig offen ist, kann ein größerer Überführungsweg bei Bewegen des Schieberelementes über eine Drehung der Führungskulisse bereitgestellt werden als bei einer komplett verschlossenen Führungskulisse, da der volle Radius eines Antriebsrades für den Überführungsweg des Schieberelementes ausgenutzt werden kann.

Ferner kann die Führungskulisse im Rahmen der Erfindung, insbesondere an einem breiter werdenden Eintrittsbereich, eine in eine radiale Richtung weg von einer Drehachse des Getriebes zeigende Einfangrippe aufweisen, um die Überführung eines Führungspins des Schieberelementes aus einem entlang der Führungskulisse radial einseitig offenen Stützbereich in einen entlang der Führungskulisse beidseitig geschlossenen Führungsbereich zu unterstützen, wobei die Einfangrippe vorzugsweise in eine radiale Richtung weg von einer Drehachse des Getriebes gesehen über den Durchmesser eines Antriebsrades des Getriebes überstehen kann. Somit kann der Führungspin des Schieberelementes bei der Bewegung in der Führungskulisse von außen nach innen zuverlässig abgefangen werden und in den beidseitig geschlossenen Führungsbereich der Führungskulissen überführt werden. Bei der Bewegung des Führungspins in der Führungskulisse von innen nach außen kann wiederum eine störungsfreie Überführung des Führungspins in den Stützbereich der Führungskulisse bereitgestellt werden. Somit kann der volle Radius des Antriebsrades ausgenutzt werden, um einen verlängerten Überführungsweg des Schieberelementes im Vergleich zu einer vollständig geschlossenen bzw. voll zwangsgeführten Führungskulisse bereitzustellen.

Zudem kann im Rahmen der Erfindung vorgesehen sein, dass der Führungspin des Schieberelementes mindestens eine Fangnase, vorzugsweise zwei abgewickelte Fangnasen, aufweist, die radial, vorzugsweise in entgegengesetzte Richtungen, vom Führungspin absteht bzw. abstehen und die Überführung des Führungspins des Schieberelementes aus einem entlang der Führungskulisse radial einseitig offenen Stützbereich in einen entlang der Führungskulisse beidseitig geschlossenen bzw. zwangsgeführten Führungsbereich unterstützt bzw. unterstützen. Somit kann eine zuverlässige Wechselwirkung zwischen dem Eintrittsbereich der Führungskulisse und dem Führungspin des Schieberelementes ermöglicht werden. Die Fangnase bzw. Fangnasen kann bzw. können dabei federelastisch an einer Einfangrippe der Führungskulisse zur Auflage kommen, um eine gleichmäßige, ruckfreie Bewegung des Führungspins des Schieberelementes entlang der Führungskulisse zu ermöglichen.

Weiterhin kann die Erfindung vorsehen, dass das Getriebe einen Vorlauf für das Schieberelement gegenüber dem Sperrbolzen beim Verlassen einer Stellung (bzw. einen Nachlauf für den Sperrbolzen gegenüber dem Schieberelement beim Verlassen einer Position) und einen Nachlauf für das Schieberelement gegenüber dem Sperrbolzen beim Erreichen einer Stellung (bzw. einen Vorlauf für den Sperrbolzen beim Erreichen einer Position) aufweist, wobei das Getriebe insbesondere eine Steuerkurve zum Antreiben des Sperrbolzens und eine Führungskulisse zum Antreiben des Schieberelementes aufweisen kann, wobei der Weg eines Steuermittels des Sperrbolzens über die Steuerkurve vorzugsweise kürzer als der Weg eines Führungspins des Schieberelementes über die Führungskulisse sein kann. Somit kann einerseits ermöglicht werden, dass der Führungspin des Schieberelementes einen längeren Weg durchläuft als das Steuermittel des Sperrbolzens. Andererseits kann somit ermöglicht werden, dass der Überführungsweg des Schieberelementes zwischen der Detektionsstellung und der Ruhestellung größer ist als der Hubweg des Sperrbolzens zwischen der Entriegelungsposition und der Verriegelungsposition. Somit kann ein verbessertes Verhältnis zwischen einer stabilen Übertragung der Antriebswirkung auf den Sperrbolzen über einen relativ kurzen Hubweg und einer präzisen Positionserkennung durch einen relativ langen Überführungsweg des Schieberelementes bereitgestellt werden.

Des Weiteren wird die erfindungsgemäße Aufgabe durch ein Verfahren zum Antreiben einer Vorrichtung zum Sperren und Freigeben eines funktionswesentlichen Bauteils eines Kraftfahrzeuges, insbesondere einer Lenksäule oder eines Gangschalthebels, gelöst, die einen zwischen einer Verriegelungsposition zum Verriegeln des funktionswesentlichen Bauteils und einer Entriegelungsposition zum Entriegeln des funktionswesentlichen Bauteils bewegbar gelagerten Sperrbolzen, ein Getriebe, welches mit dem Sperrbolzen in mechanischer Wirkverbindung steht, um den Sperrbolzen zwischen der Verriegelungsposition und der Entriegelungsposition zu überführen, und eine Detektionseinheit aufweist, welche ein Schieberelement zum Bewegen eines Signalgebers und mindestens ein erstes ortsfestes Sensorelement zum Detektieren mindestens einer Stellung des Schieberelementes aufweist, wobei das Schieberelement mit dem Getriebe in mechanischer Wirkverbindung steht, um das Schieberelement zwischen einer Ruhestellung, in welcher sich der Signalgeber beabstandet vom ersten Sensorelement befindet, und einer Detektionsstellung, in welcher sich der Signalgeber im Detektionsbereich des ersten Sensorelementes befindet, zu überführen, gekennzeichnet durch folgende Schritte:
a) Entriegeln des funktionswesentlichen Bauteils und Bereitstellen eines Entriegelungssignals,
b) Entriegeln des funktionswesentlichen Bauteils ohne Bereitstellen eines Entriegelungssignals,
c) Verriegeln des funktionswesentlichen Bauteils ohne Bereitstellen eines Verriegelungssignals,
d) Verriegeln des funktionswesentlichen Bauteils und Bereitstellen eines Verriegelungssignals,
wobei zum Verriegeln des funktionswesentlichen Bauteils die Schritte a) bis d) oder zum Entriegeln des funktionswesentlichen Bauteils die Schritte d) bis a) nacheinander ausgeführt werden.

Somit kann erreicht werden, dass beim Wechseln der Positionen des Sperrbolzens zunächst das Schieberelement seine jeweilige Stellung verlässt bevor der Sperrbolzen anfängt, sich zu bewegen. Somit kann nicht nur die Detektion der Positionen des Sperrbolzens zuverlässig und präzise ausgeführt werden, sondern auch die Funktion einer mechanischen Absicherung des Sperrbolzens durch das Schieberelement realisiert werden. Dabei werden die Bewegungsabläufe des Sperrbolzens und des Schieberelementes derart mit einem abwechselnden Nachlauf synchronisiert, dass eine reibungslose Überführung des Sperrbolzens und des Schieberelementes zwischen den jeweiligen Positionen bzw. zwischen den jeweiligen Stellungen erfolgen kann. Durch die erfindungsgemäß abgestimmte Abfolge der Bewegungen des Sperrbolzens und des Schieberelementes kann außerdem ermöglicht werden, dass spätestens dann, wenn ein Detektionssignal erzeugt wird, der Sperrbolzen sich in der zu detektierenden Position befindet. Zudem werden durch das erfindungsgemäße Verfahren die gleichen Vorteile erreicht, die oben in Verbindung mit der erfindungsgemäßen Vorrichtung beschrieben wurden. Zur Vermeidung von Wiederholungen wird vorliegend vollumfänglich darauf Bezug genommen.

Weitere Maßnahmen und Vorteile sowie technische Merkmale der Erfindung ergeben sich aus den Ansprüchen, der nachfolgenden Beschreibung und den Zeichnungen. Dabei können unterschiedliche Merkmale für sich alleine und in einer beliebigen Kombination vorteilhaft sein, ohne den Rahmen der Erfindung zu verlassen. In den nachstehenden Figuren ist die erfindungsgemäße Vorrichtung in mehreren Ausführungsbeispielen detailliert dargestellt. Es zeigen:
- Fig. 1: eine schematische Darstellung einer erfindungsgemäßen Vorrichtung von oben,
- Fig. 2: eine schematische Seitenansicht einer erfindungsgemäßen Vorrichtung mit einem Sperrbolzen in einer Entriegelungsposition,
- Fig. 3: eine schematische Seitenansicht einer erfindungsgemäßen Vorrichtung mit einem Sperrbolzen in einer Verriegelungsposition,
- Fig. 4a: eine schematische Schnittdarstellung einer erfindungsgemäßen Vorrichtung quer zu einer Hubachse des Sperrbolzens mit dem Sperrbolzen in einer Entriegelungsposition und einem Schieberelement in einer Detektionsstellung,
- Fig. 4b: eine schematische Schnittdarstellung der erfindungsgemäßen Vorrichtung gemäß der Figur 4a quer zur Hubachse des Sperrbolzens mit dem Sperrbolzen in der Entriegelungsposition und dem Schieberelement kurz nach dem Verlassen der Detektionsstellung,
- Fig. 4c: eine schematische Schnittdarstellung der erfindungsgemäßen Vorrichtung gemäß der Figuren 4a und 4b quer zur Hubachse des Sperrbolzens mit dem Sperrbolzen in einer Verriegelungsposition und dem Schieberelement kurz vor dem Erreichen einer Ruhestellung,
- Fig. 4d: eine schematische Schnittdarstellung einer erfindungsgemäßen Vorrichtung gemäß der Figuren 4a bis 4c quer zur Hubachse des Sperrbolzens mit dem Sperrbolzen in der Verriegelungsposition und dem Schieberelement in der Ruhestellung,
- Fig. 5: schematische Darstellung eines erfindungsgemäßen Getriebes mit einem Antriebselement, einem Schaltelement und einer Führungskulisse, und
- Fig. 6: eine schematische Schnittdarstellung einer erfindungsgemäßen Vorrichtung kurz vor dem Einfangen eines Führungspins eines Schieberelementes in einer Führungskulisse mithilfe einer Einfangrippe am Eintrittsbereich der Führungskulisse.

In den nachfolgenden Figuren werden für die gleichen technischen Merkmale auch von unterschiedlichen Ausführungsbeispielen die identischen Bezugszeichen verwendet.

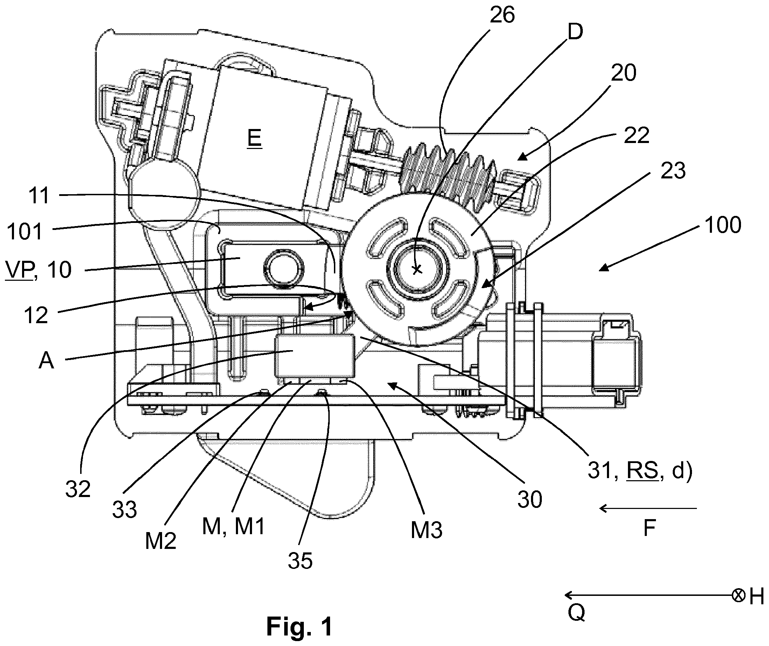

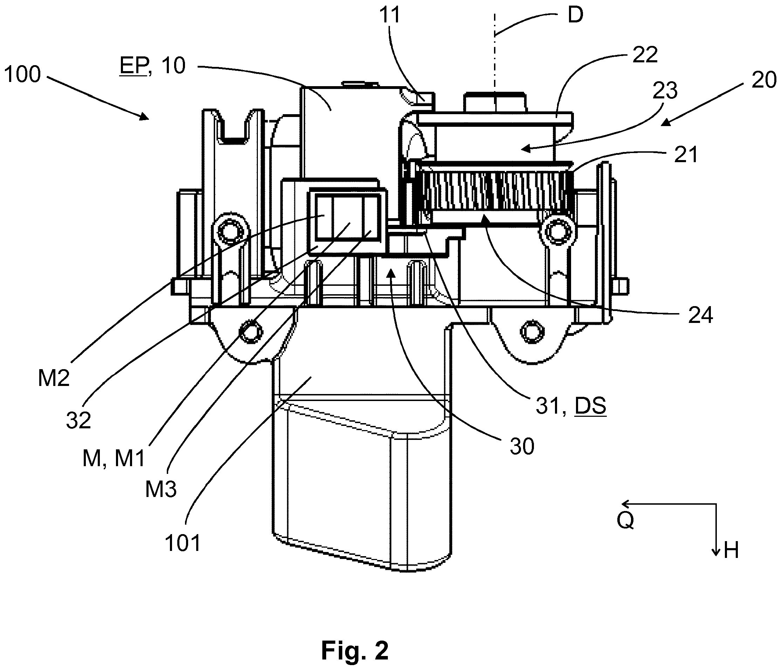

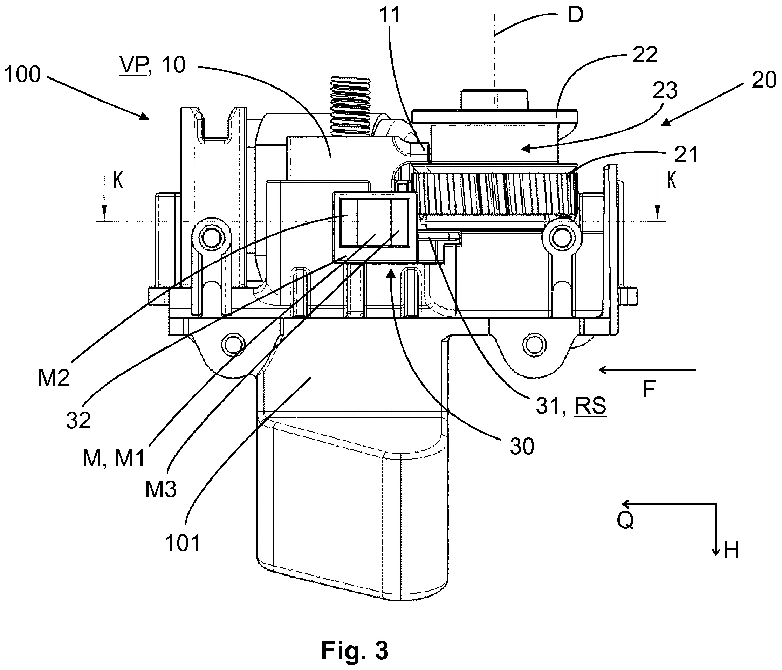

Die Figuren 1 bis 3 zeigen eine Vorrichtung 100 zum Sperren und Freigeben eines funktionswesentlichen Bauteils eines Kraftfahrzeuges, insbesondere einer Lenksäule oder eines Gangschalthebels, die einen zwischen einer Verriegelungsposition VP (s. die Figur 3) zum Verriegeln des funktionswesentlichen Bauteils und einer Entriegelungsposition EP (s. die Figur 2) zum Entriegeln des funktionswesentlichen Bauteils bewegbar gelagerten Sperrbolzen 10 aufweist. Ferner umfasst die Vorrichtung 100 ein Getriebe 20, welches mit dem Sperrbolzen 10 in mechanischer Wirkverbindung steht, um den Sperrbolzen 10 zwischen der Verriegelungsposition VP und der Entriegelungsposition EP anzutreiben. Der Sperrbolzen 10 wird dabei längsverschieblich entlang einer Hubrichtung H in einem Führungsgehäuse 101 gelagert. Zudem umfasst die Vorrichtung 100 eine Detektionseinheit 30, welche ein Schieberelement 31 zum Bewegen eines Signalgebers 32 und mindestens ein erstes ortsfestes Sensorelement 33 zum Detektieren mindestens einer Stellung RS, DS des Schieberelementes 31 aufweist. Das Schieberelement 31 steht mit dem Getriebe 20 in mechanischer Wirkverbindung, um das Schieberelement 31 zwischen einer Ruhestellung RS, in welcher sich der Signalgeber 32 beabstandet vom ersten Sensorelement 33 befindet, und einer Detektionsstellung DS, in welcher sich der Signalgeber 32 im Detektionsbereich des ersten Sensorelementes 33 befindet, zu überführen. Hierzu ist es erfindungsgemäß vorgesehen, dass die Detektionseinheit 30 ein Federelement 34 aufweist, um das Schieberelement 31 mit einer Federkraft F aus der Ruhestellung RS in die Detektionsstellung DS zu beaufschlagen.

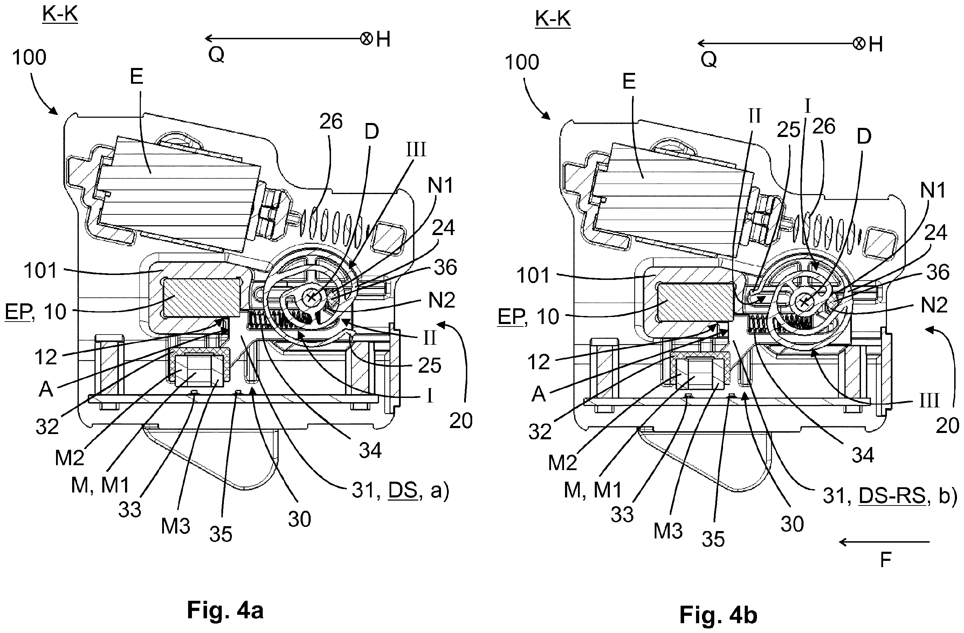

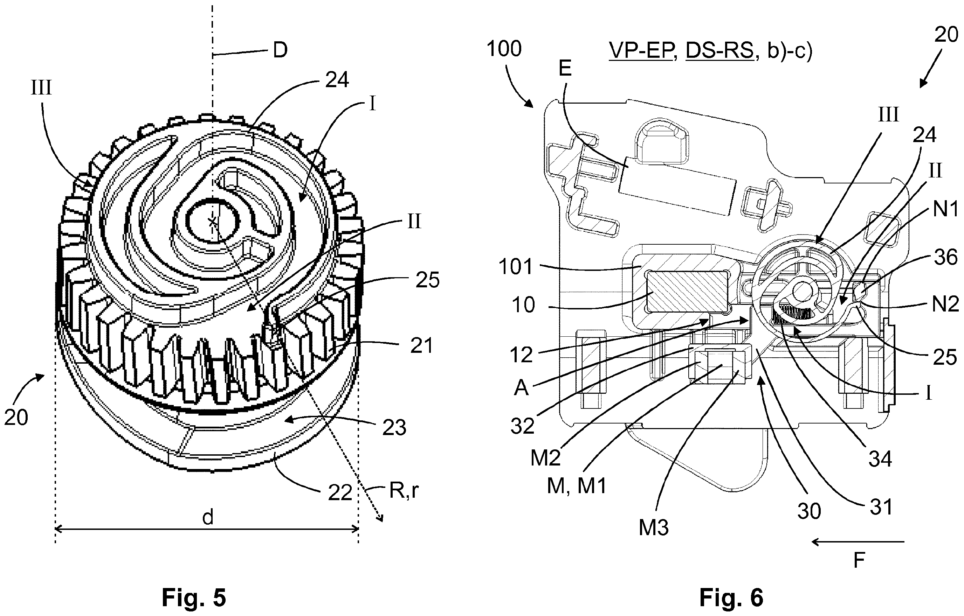

Die Detektionseinheit 30 stellt mithilfe eines, vorzugsweise längsverschieblichen, Schieberelementes 31 zwei Funktionalitäten zur Verfügung. Zum einen dient die Detektionseinheit 30 zur Positionserkennung des Sperrbolzens 10. Hierzu trägt das Schieberelement 31 den Signalgeber 32 mit mindestens einem Permanentmagneten M, welcher mit dem Schieberelement 31 hin und her zwischen der Detektionsstellung DS und der Ruhestellung RS verschiebbar ist. Der Signalgeber 32 kann ferner drei Permanentmagneten M1, M2, M3 mit alternierenden magnetischen Orientierungen aufweisen, sodass dem Detektionsbereich des mindestens einen ersten Sensorelementes 33 oder eines zweiten Sensorelementes 35 ein Südpol mit zwei benachbarten Nordpolen zugewandt wird. Dadurch können die Magnetfeldlinien präzise ausgerichtet werden, sodass ein elektromagnetisches Signal mit hoher Auflösung erzeugt wird. Die Erkennung mithilfe der entsprechenden Sensorelemente 33, 35 erlaubt es, die Stellung RS, DS des Schieberelementes 31 und damit indirekt auch die Position VP, EP des Sperrbolzens 10 zu bestimmen. Eine weitere Funktionalität des Schieberelementes 31 ist ein mechanisches Einrasten des Schieberelementes 31 in einer korrespondierenden Ausnehmung 12 am Sperrbolzen 10, wenn sich der Sperrbolzen 10 in seiner Entriegelungsposition EP befindet. Das Getriebe 20 weist dabei eine zum Teil als eine Zwangsführung ausgebildete Führungskulisse 24 auf, um das Schieberelement 31 zwischen der Ruhestellung RS und der Detektionsstellung DS zu verschieben. Der Aufbau der Führungskulisse 24 wird im Nachfolgenden mithilfe der Figuren 4a bis 4d und der Figur 6 im Detail erklärt.

Das erfindungsgemäße Federelement 34 erzeugt eine Federkraft F auf das Schieberelement 31, die das Schieberelement 31 aus der Ruhestellung RS in die Detektionsstellung DS belastet. Die Federkraft F des Federelementes 34 dient dazu, dass das Schieberelement 31 die Detektionsstellung DS sicher erreicht und nicht ungewollt in einer Zwischenstellung verharrt. Die Federkraft F des Federelementes 34 dient sogar in Situationen, in denen das Schieberelement 31 die Wirkverbindung zum Getriebe 20 bzw. zur Führungskulisse 24 verliert, bspw. wenn ein zugehöriger Führungspin 36 des Schieberelementes 31 abbricht, dazu, dass das Schieberelement 31 seine Detektionsstellung DS trotzdem erreicht. In der Detektionsstellung DS des Schieberelementes 31 wird zum einen die Entriegelungsposition EP des Sperrbolzens 10 zuverlässig erkannt und zum anderen der Sperrbozen 10 in seiner Entriegelungsposition EP mechanisch arretiert. Somit liefert das erfindungsgemäße federbelastete Schieberelement 31 eine mechanische Absicherung des Sperrbolzens 10 in der Entriegelungsposition EP, sodass der Sperrbolzen 10 zuverlässig auf Abstand zum funktionswesentlichen Bauteil gehalten wird und während der Fahrt des Kraftfahrzeuges das funktionswesentliche Bauteil nicht ungewollt blockiert. Die zuverlässige Erkennung der Entriegelungsposition EP des Sperrbolzens 10 sorgt dafür, dass die Elektronik des Kraftfahrzeuges im Betrieb des Kraftfahrzeuges entsprechend angesteuert wird und nicht ungewollt ausfällt.

Die erfindungsgemäße Detektionseinheit 30 liefert somit eine zweifache Absicherung bei der Überführung des Schieberelementes 31 aus der Ruhestellung RS in die Detektionsstellung DS. Wenn das Getriebe 20 mit dem Schieberelement 31 im mechanischen Eingriff steht, unterstützt das Federelement 34 lediglich die Antriebswirkung des Getriebes 20. Wenn jedoch das Schieberelement 31 die mechanische Verbindung zum Getriebe 20 verliert, so übernimmt das Federelement 34 die Rolle des Getriebes 20, um das Schieberelement 31 trotz eines fehlenden mechanischen Eingriffes mit dem Getriebe 20 aus der Ruhestellung RS in die Detektionsstellung DS zu überführen. Zurück in die Ruhestellung RS kann das Schieberelement 31 dann nicht durch das Getriebe 20 oder das Federelement 34, aber ggf. durch den Sperrbolzen 10 entgegen der Wirkung der Federkraft F herausgedrückt werden.

Somit wird eine Vorrichtung 100 zum Sperren und Freigeben eines funktionswesentlichen Bauteils eines Kraftfahrzeugs, bspw. einer Lenksäule oder eines Gangschalthebels, bereitgestellt, die einfach mit nur wenigen Bauteilen aufgebaut ist, die leicht zu montieren ist, die zuverlässig und sicher im Betrieb ist und die eine zuverlässige Erkennung mindestens einer Entriegelungsposition EP des Sperrbolzens 10 ermöglicht. Mithilfe der Federbelastung wird zudem sichergestellt, dass der Sperrbolzen 10 in der Entriegelungsposition EP durch das erfindungsgemäße federbelastete Schieberelement 31 zuverlässig erreicht wird und die Sensorik die zugehörige Entriegelungsposition EP des Sperrbolzens 10 in einer sicheren Weise erkennt.

Wie die Figuren 2 und 3 und im Nachfolgenden die Figur 5 zeigen, weist das Getriebe 20 ein Antriebsrad 21 in Form eines Schneckenrades auf, welches mit einer Schnecke 26 im Eingriff steht. Die Schnecke 26 wird von einem elektrischen Antrieb bzw. Motor E um eine Antriebswelle drehbar angetrieben. Das Antriebsrad 21 wird drehbar um eine Abtriebswelle in Bewegung versetzt, die im Nachfolgenden als eine Drehachse D des Getriebes 20 bezeichnet wird. Das Getriebe 20 kann somit als ein Schneckengetriebe ausgebildet sein. Das Antriebsrad 21 überträgt die Antriebswirkung des elektrischen Antriebes E auf ein Schaltelement 22 für den Sperrbolzen 10 und die Führungskulisse 24 für das Schieberelement 31. Ein solches Getriebe 20 ist vorteilhafterweise geräuscharm, belastbar und ermöglicht hohe Übersetzungen zwischen der Schnecke 26 und dem Antriebsrad 21. Somit kann ein relativ kleiner elektrischer Motor E eine stabile Kraftübertragung auf den Sperrbolzen 10 und auf das Schieberelement 31 ermöglichen. Ein solches Getriebe 20 kann außerdem selbsthemmend sein. Somit können der Sperrbolzen 10 in seinen Endpositionen VP, EP und das Schieberelement 31 in seinen Endstellungen RS, DS zuverlässig gegen ein ungewolltes Verschieben abgesichert werden. Andere Getriebeformen anstelle eines Schneckengetriebes können aber im Rahmen der Erfindung ebenfalls denkbar sein, die sich über die Antriebswelle, aber nicht über die Abtriebswelle antreiben lassen.

Wie die Figuren 4a bis 4d zeigen, ist das Schieberelement 31 translatorisch, vorzugsweise entlang einer Richtung Q, die sich im Wesentlichen quer zur Hubrichtung H des Sperrbolzens 10 erstreckt, bewegbar. Eine translatorische Lagerung und Bewegung des Schieberelementes 31 kann stabil ausgeführt werden. Quer zur Hubrichtung H des Sperrbolzens 10 kann eine zuverlässige Arretierung des Sperrbolzens 10 in der Entriegelungsposition EP durch das Schieberelement 31 in der Detektionsstellung DS erreicht werden. Die translatorische Bewegung des Sperrbolzens 10 entlang der Hubrichtung H und die translatorische Bewegung des Schieberelementes 31 quer zur Hubrichtung H können einfach koordiniert werden.

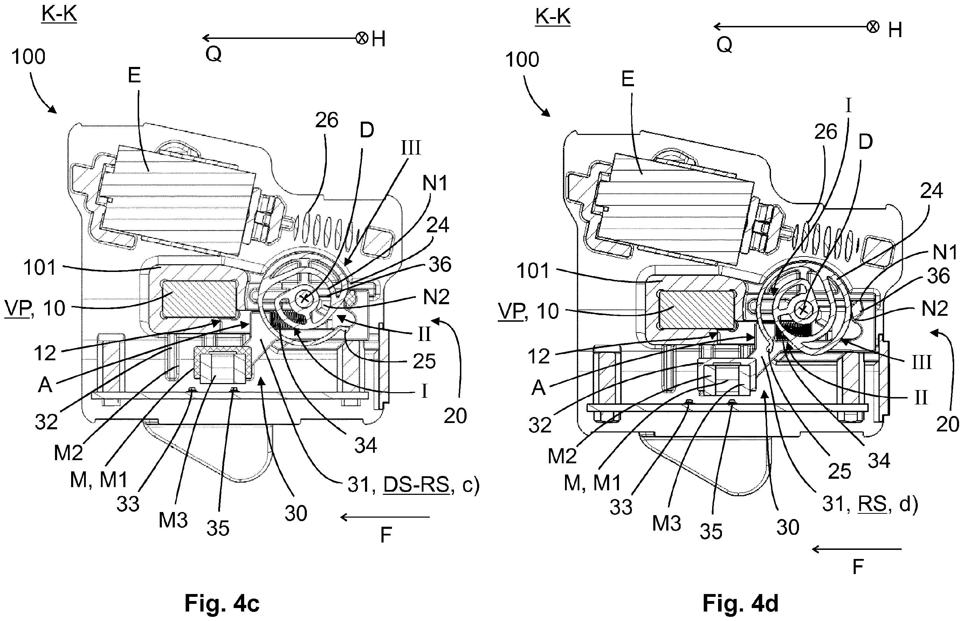

Wie außerdem die Figuren 4a und 4d zeigen, befindet sich das Schieberelement 31 in der Ruhestellung RS der Figur 4d beabstandet vom Sperrbolzen 10 und in der Detektionsstellung DS der Figur 4a im mechanischen Eingriff mit dem Sperrbolzen 10, wenn sich der Sperrbolzen 10 in der Entriegelungsposition EP befindet. Somit kann das Schieberelement 31 in der Detektionsstellung DS den Sperrbolzen 10 in der Entriegelungsposition EP arretieren. Hierzu weist das Schieberelement 31 einen Arretierabschnitt A auf, der in der Detektionsstellung DS des Schieberelementes 31 in einer korrespondieren Ausnehmung 12 am Sperrbolzen 10 eingreift, die in der Entriegelungsposition EP des Sperrbolzens 10 dem Arretierabschnitt A gegenüberliegt. Somit kann mit nur einem Bauteil, dem Schieberelement 31, die Funktionalität der erfindungsgemäßen Vorrichtung 100 erweitert werden, wodurch eine kompakte und sichere Vorrichtung 100 zum Sperren und Freigeben des funktionswesentlichen Bauteils bereitgestellt werden kann.

Wie die Figuren 4a bis 4d zudem zeigen, weist der Signalgeber 32 der Detektionseinheit 30, der mit dem Schieberelement 31 bewegbar ist, mindestens einen Permanentmagneten M mit einer magnetischen Orientierung, vorzugsweise drei Permanentmagneten M1, M2, M3 mit alternierenden magnetischen Orientierungen, auf. Die Permanentmagnete M, M1, M2, M3 können ein elektromagnetisches Signal erzeugen, ohne dass hierzu eine Energiequelle benötigt wird. Ein elektromagnetisches Signal eignet sich auf eine vorteilhafterweise für eine präzise Positionsbestimmung des Schieberelementes 31. Durch ein Verwenden von drei Permanentmagneten M1, M2, M3 kann ein elektromagnetisches Signal mit einer hohen Auflösung bereitgestellt werden, welcher sogar mithilfe von günstigen, bspw. eindimensionalen, Magnetfeldsensoren präzise erkannt werden kann. Darüber hinaus kann das erste Sensorelement 33 mindestens einen, vorzugsweise zwei, Magnetfeldsensoren, bevorzugt Hallsensoren, aufweisen, um den Signalgeber 32 im Detektionsbereich des ersten Sensorelementes 33 zu erfassen. Im Rahmen der Erfindung kann das erste Sensorelement 33 nur einen Magnetfeldsensor aufweisen, bspw. in Form eines Hallsensors mit einer 3D-Auslösung. Ein solches Sensorelement 33 ist sehr präzise. Zudem kann das erste Sensorelement 33 zwei Magnetfeldsensoren aufweisen, bspw. in Form von kostengünstigen eindimensionalen Hallsensoren, die im Zusammenspiel eine präzise Positionserkennung ermöglichen. Durch Verwenden von zwei Magnetfeldsensoren kann außerdem der Vorteil erreicht werden, dass die Erkennung trotz eines Ausfalls eines der Magnetfeldsensoren möglich ist.

Weiterhin zeigen die Figuren 4a bis 4d, dass die Detektionseinheit 30 mindestens ein zweites ortsfestes Sensorelement 35 zum Detektieren der Ruhestellung RS des Schieberelementes 31 aufweisen kann. Das zweite Sensorelement 35 kann ebenfalls mindestens einen Magnetfeldsensor, bevorzugt einen Hallsensor, aufweisen. Mithilfe des zweiten Sensorelementes 35 kann eine aktive, wenn auch indirekte Erkennung nicht nur der Entriegelungsposition EP, sondern auch der Verriegelungsposition VP des Sperrbolzens 10 ermöglicht werden. Die Überwachung und Detektion von beiden Endpositionen VP, EP des Sperrbolzens 10 hat den Vorteil, dass die Positionserfassung des Sperrbolzens 10 präzisier und zuverlässiger erfolgen kann als bei der Überwachung nur einer Position EP, weil zum Auswerten mehr Daten vorliegen, die miteinander verglichen und somit verifiziert werden können.

Des Weiteren verdeutlichen die Figuren 4a bis 4d die Schritte eines erfindungsgemäßen Verfahrens zum Antreiben der Vorrichtung 100:
a) Entriegeln des funktionswesentlichen Bauteils und Bereitstellen eines Entriegelungssignals (s. die Figur 4a),
b) Entriegeln des funktionswesentlichen Bauteils ohne Bereitstellen eines Entriegelungssignals (s. die Figur 4b),
c) Verriegeln des funktionswesentlichen Bauteils ohne Bereitstellen eines Verriegelungssignals (s. die Figur 4c),
d) Verriegeln des funktionswesentlichen Bauteils und Bereitstellen eines Verriegelungssignals (s. die Figur 4d),
wobei zum Verriegeln des funktionswesentlichen Bauteils die Schritte a) bis d) oder zum Entriegeln des funktionswesentlichen Bauteils die Schritte d) bis a) nacheinander ausgeführt werden.

Somit kann erreicht werden, dass beim Wechseln der Positionen VP, EP des Sperrbolzens 10 zunächst das Schieberelement 31 seine jeweilige Stellung RS, DS verlässt, bevor der Sperrbolzen 10 anfängt, sich zu bewegen. Somit kann nicht nur die Detektion der Positionen VP, EP des Sperrbolzens 10 zuverlässig und präzise ausgeführt werden, sondern auch die Funktion einer mechanischen Absicherung des Sperrbolzens 10 durch das Schieberelement 31 realisiert werden. Dabei werden die Bewegungsabläufe des Sperrbolzens 10 und des Schieberelementes 31 derart mit einem abwechselnden Nachlauf oder Vorlauf synchronisiert, dass eine reibungslose Überführung des Sperrbolzens 10 und des Schieberelementes 31 zwischen den jeweiligen Positionen VP, EP bzw. zwischen den jeweiligen Stellungen RS, DS erfolgen kann.

Wie die Figur 5 und zuvor die Figuren 2 und 3 zeigen, weist das Getriebe 20 ein drehbar um die Drehachse D des Getriebes 20 angetriebenes Schaltelement 22 mit einer wendelförmigen Steuerkurve 23 auf, in welcher ein korrespondierendes Steuermittel 11 des Sperrbolzens 10 geführt wird, um eine Rotationsbewegung des Schaltelementes 22 in eine translatorische Bewegung des Sperrbolzens 10 entlang der Hubrichtung H zwischen der Verriegelungsposition VP und der Entriegelungsposition EP zu transformieren. Das Schaltelement 22 ist dabei drehfest mit dem Antriebsrad 21 des Getriebes 20 verbunden, wie es in der Figur 5 gezeigt ist. Die Steuerkurve 23 des Schaltelementes 22 wendet sich im Wesentlichen wendelförmig bzw. schraubenförmig um die Drehachse D des Antriebsrades 21, sodass beim Drehen des Schaltelementes 22 das Steuermittel 11 des Sperrbolzens 10 über die Höhe der Steuerkurve 23 entweder nach oben oder nach unten verdrängt, wodurch der Sperrbolzen 10 in die Entriegelungsposition EP oder in die Verriegelungsposition VP überführt wird. Die Länge der Steuerkurve 23 ist dabei größer als der Hubweg, den der Sperrbolzen 10 zwischen der Verriegelungsposition VP und der Entriegelungsposition EP ausführt. Über die Steuerkurve 23 kann folglich die Antriebswirkung stabil auf den Sperrbolzen 10 übertragen werden.

In der Ansicht der Figur 5 sowie der Figuren 4a bis 4d ist außerdem gezeigt, dass das Getriebe 20 eine kurvenartige, im Wesentlichen spiralförmige Führungskulisse 24 aufweist, die drehbar um die Drehachse D des Getriebes 20 angetrieben wird. In der Führungskulisse 24 wird der korrespondierende Führungspin 36 des Schieberelementes 31 geführt, um eine Rotationsbewegung der Führungskulisse 24 in eine translatorische Bewegung des Schieberelementes 31 zwischen der Ruhestellung RS und der Detektionsstellung DS entlang einer Richtung Q, die sich im Wesentlichen quer zur Hubrichtung H des Sperrbolzens 10 erstreckt, zu transformieren. Die Führungskulisse 24 kann dabei an einem scheibenförmigen Element, welches drehfest mit dem Antriebsrad 21 des Getriebes 20 verbunden sein kann, oder direkt an einer Seite des Antriebsrades 21 ausgebildet sein, die dem Schaltelement 22 abgewandt ist. Die Führungskulisse 24 erstreckt sich im Wesentlichen spiralförmig um die Drehachse D des Antriebsrades 21 in einer Ebene, die senkrecht zur Drehachse D des Antriebsrades 21 ausgerichtet ist. In der Führungskulisse 24 wird der Führungspin 36 des Schieberelementes 31 geführt, wobei im inneren der Führungskulisse 24 nahe an der Drehachse D des Antriebsrades 21 das Schieberelement 31 nahe dem Sperrbolzen 10 kommt und mit einem wachsenden Abstand r von der Drehachse D das Schieberelement 31 sich vom Sperrbolzen 10 entfernt. Die Länge der Führungskulisse 24 ist dabei größer als ein Überführungsweg des Schieberelementes 31 zwischen der Detektionsstellung DS und der Ruhestellung RS. Über die Form und die Länge der Führungskulisse 24 wird vorteilhafterweise eine stabile Übertragung der Antriebswirkung vom elektrischen Antrieb E auf das Schieberelement 31 ermöglicht.

Die Figur 5 zeigt ferner, dass die Führungskulisse 24 mit einem wachsenden Abstand r zur Drehachse D des Getriebes 20 zuerst einen entlang der Führungskulisse 24 beidseitig geschlossenen bzw. zwangsgeführten Führungsbereich I, danach einen sich zu einer Seite der Führungskulisse 24 öffnenden und insbesondere breiter werdenden Eintrittsbereich II und danach einen entlang der Führungskulisse 24 radial einseitig offenen Stützbereich III für den Führungspin 36 des Schieberelementes 31 aufweist. Im Inneren der Führungskulisse 24 kann der Führungspin 36 des Schieberelementes 31 zuverlässig durch den beidseitig geschlossenen bzw. zwangsgeführten Führungsbereich I der Führungskulisse 24 geführt werden. Der Eintrittsbereich II dient dabei als ein Übergangsbereich zwischen dem Führungsbereich I und dem radial einseitig offenen Stützbereich III der Führungskulisse 24. Bei einer Bewegung des Führungspins 36 in der Führungskulisse 24 von innen nach außen kann sich der Führungspin 36 an einer Seite des Stützbereiches III abstützen. Durch den radial einseitig offenen Stützbereich III kann ein größerer Überführungsweg bei Bewegen des Schieberelementes 31 über eine Drehung der Führungskulisse 24 bereitgestellt werden als bei einer vollständig zwangsgeführten Führungskulisse 24, da der volle Radius des Antriebsrades 21 für den Überführungsweg des Schieberelementes 31 zwischen der Detektionsstellung DS und der Ruhestellung RS ausgenutzt werden kann.

Weiterhin ist in der Figur 5 zu erkennen, dass die Führungskulisse 24 im Rahmen der Erfindung, insbesondere am breiter werdenden Eintrittsbereich II, eine in eine radiale Richtung R weg von der Drehachse D des Getriebes 20 zeigende Einfangrippe 25 aufweist, um die Überführung des Führungspins 36 des Schieberelementes 31 aus dem entlang der Führungskulisse 24 radial einseitig offenen Stützbereich III in den entlang der Führungskulisse 24 beidseitig geschlossenen bzw. zwangsgeführten Führungsbereich I zu unterstützen, wobei die Einfangrippe 25 vorzugsweise in eine radiale Richtung R weg von der Drehachse D des Getriebes 20 gesehen über den Durchmesser d des Antriebsrades 21 des Getriebes 20 überstehen kann. Somit kann beim Antreiben des Schieberelementes 31 der volle Radius des Antriebsrades 21 ausgenutzt werden, um einen verlängerten Überführungsweg des Schieberelementes 31 zwischen der Ruhestellung RS und der Detektionsstellung DS insbesondere im Vergleich zu einer vollständig geschlossenen bzw. voll zwangsgeführten Führungskulisse 24 bereitzustellen.

Wie in der Figur 6 gezeigt ist, weist der Führungspin 36 des Schieberelementes 31 mindestens eine Fangnase N1, vorzugsweise zwei abgewickelte Fangnasen N1, N2, auf, die radial, vorzugsweise in entgegengesetzte Richtungen, vom Führungspin 36 absteht bzw. abstehen und die die Überführung des Führungspins 36 des Schieberelementes 31 aus einem entlang der Führungskulisse 24 radial einseitig offenen Stützbereich III in einen entlang der Führungskulisse 24 beidseitig geschlossenen bzw. zwangsgeführten Führungsbereich I unterstützt bzw. unterstützen. Somit kann eine mechanische Wechselwirkung zwischen dem Eintrittsbereich II der Führungskulisse 24, insbesondere der Einfangrippe 25 der Führungskulisse 24, und dem Führungspin 36 des Schieberelementes 31 erleichtert werden. Die Fangnase N1 bzw. Fangnasen N1, N2 kann bzw. können dabei federelastisch an einer Einfangrippe 25 der Führungskulisse 24 zur Auflage kommen, um eine ruckfreie Bewegung des Führungspins 36 des Schieberelementes 31 entlang der Führungskulisse 24 zu ermöglichen.

Wie aus der Figur 5 zudem zu erkennen ist, ist der Weg des Steuermittels 11 des Sperrbolzens 10 über die Steuerkurve 23 wesentlich kürzer als der Weg des Führungspins 36 des Schieberelementes 31 über die Führungskulisse 24. Somit kann im Rahmen der Erfindung ein Vorlauf für das Schieberelement 31 gegenüber dem Sperrbolzen 10 beim Verlassen der jeweiligen Stellung RS, DS bzw. ein Nachlauf für den Sperrbolzen 10 gegenüber dem Schieberelement 31 beim Verlassen der jeweiligen Position VP, EP bereitgestellt werden. Mit anderen Worten fängt immer das Schieberelement 31 an sich zu bewegen, bevor der Sperrbolzen 10 bewegt wird. Außerdem kann somit ein Nachlauf für das Schieberelement 31 gegenüber dem Sperrbolzen 10 beim Erreichen der jeweiligen Stellung RS, DS bzw. ein Vorlauf für den Sperrbolzen 10 beim Erreichen der jeweiligen Position VP, EP bereitgestellt werden. Mit anderen Worten erreicht der Sperrbolzen 10 immer zuerst die jeweilige Position VP, EP, bevor das Schieberelement 31 in die jeweilige Stellung RS, DS nach dem Sperrbolzen 10 überführt wird.

Somit kann einerseits ermöglicht werden, dass der Führungspin 36 des Schieberelementes 31 einen längeren Weg durchläuft als das Steuermittel 11 des Sperrbolzens 10. Andererseits kann somit ermöglicht werden, dass der Überführungsweg des Schieberelementes 31 zwischen der Detektionsstellung DS und der Ruhestellung RS größer ist als der Hubweg des Sperrbolzens 10 zwischen der Entriegelungsposition EP und der Verriegelungsposition VP. Somit kann ein verbessertes Verhältnis zwischen einer stabilen Übertragung der Antriebswirkung auf den Sperrbolzen 10 über einen relativ kurzen Hubweg und einer präzisen Positionserkennung durch einen relativ langen Überführungsweg des Schieberelementes 31 ermöglicht werden.

Die voranstehende Erläuterung der Ausführungsformen beschreibt die vorliegende Erfindung ausschließlich im Rahmen von Beispielen.

### Bezugszeichenliste

- 100: Vorrichtung

- 10: Sperrbolzen
- 11: Steuermittel
- 12: Ausnehmung

- 20: Getriebe
- 21: Antriebsrad
- 22: Schaltelement
- 23: Steuerkurve
- 24: Führungskulisse
- 25: Einfangrippe
- 26: Schnecke

- 30: Detektionseinheit
- 31: Schieberelement
- 32: Signalgeber
- 33: erstes Sensorelement
- 34: Federelement
- 35: zweites Sensorelement
- 36: Führungspin

- 101: Führungsgehäuse

- A: Arretierabschnitt
- D: Drehachse
- E: elektrischer Antrieb, Motor
- F: Federkraft
- M: Permanentmagnet
- M1: Permanentmagnet
- M2: Permanentmagnet
- M3: Permanentmagnet

- VP: Verriegelungsposition
- EP: Entriegelungsposition

- RS: Ruhestellung
- DS: Detektionsstellung

- N1: Fangnase
- N2: Fangnase

- H: Hubrichtung
- Q: Querrichtung

- R: radiale Richtung bzgl. der Drehachse

- d: Durchmesser des Antriebsrades
- r: Abstand zur Drehachse

- I: Führungsbereich der Führungskulisse
- II: Eintrittsbereich der Führungskulisse
- III: Stützbereich der Führungskulisse

## Patentansprüche

1. Vorrichtung (100) zum Sperren und Freigeben eines funktionswesentlichen Bauteils eines Kraftfahrzeuges, insbesondere einer Lenksäule oder eines Gangschalthebels, aufweisend
einen zwischen einer Verriegelungsposition (VP) zum Verriegeln des funktionswesentlichen Bauteils und einer Entriegelungsposition (EP) zum Entriegeln des funktionswesentlichen Bauteils bewegbar gelagerten Sperrbolzen (10),
ein Getriebe (20),
welches mit dem Sperrbolzen (10) in mechanischer Wirkverbindung steht, um den Sperrbolzen (10) zwischen der Verriegelungsposition (VP) und der Entriegelungsposition (EP) zu überführen,
und eine Detektionseinheit (30),
welche ein Schieberelement (31) zum Bewegen eines Signalgebers (32) und mindestens ein erstes ortsfestes Sensorelement (33) zum Detektieren mindestens einer Stellung (RS, DS) des Schieberelementes (31) aufweist,
wobei das Schieberelement (31) mit dem Getriebe (20) in mechanischer Wirkverbindung steht, um das Schieberelement (31) zwischen einer Ruhestellung (RS), in welcher sich der Signalgeber (32) beabstandet vom ersten Sensorelement (33) befindet, und einer Detektionsstellung (DS), in welcher sich der Signalgeber (32) im Detektionsbereich des ersten Sensorelementes (33) befindet, zu überführen,
**dadurch gekennzeichnet,**
**dass** die Detektionseinheit (30) ein Federelement (34) aufweist, um das Schieberelement (31) mit einer Federkraft (F) aus der Ruhestellung (RS) in die Detektionsstellung (DS) zu beaufschlagen, sodass eine zweifache Absicherung bei der Überführung des Schieberelementes (31) aus der Ruhestellung (RS) in die Detektionsstellung (DS) vorgesehen ist,
wobei, sollte das Schieberelement (31) die mechanische Verbindung zum Getriebe (20) verlieren, das Federelement (34) dazu sorgt, dass das Schieberelement (31) trotz mechanischer Unterbrechungen in der Antriebskette seine Detektionsstellung (DS) sicher erreicht.

2. Vorrichtung (100) nach Anspruch 1,
**dadurch gekennzeichnet,**
**dass** das Schieberelement (31) translatorisch, vorzugsweise entlang einer Richtung (Q), die sich im Wesentlichen quer zu einer Hubrichtung (H) des Sperrbolzens (10) erstreckt, bewegbar gelagert ist,
wobei das Getriebe (20) insbesondere ein Antriebsrad (21) aufweist, um eine Antriebswirkung an den Sperrbolzen (10) und/oder das Schieberelement (31) bereitzustellen.

3. Vorrichtung (100) nach Anspruch 1 oder 2,
**dadurch gekennzeichnet,**
**dass** das Schieberelement (31) in der Ruhestellung (RS) sich beabstandet vom Sperrbolzen (10) befindet und dass das Schieberelement (31) in der Detektionsstellung (DS) den Sperrbolzen (10) form- und/oder kraftschlüssig arretiert, wenn sich der Sperrbolzen (10) in der Entriegelungsposition (EP) befindet,
wobei das Schieberelement (31) insbesondere einen Arretierabschnitt (A) aufweist, der in der Detektionsstellung (DS) des Schieberelementes (31) in einer korrespondierenden Ausnehmung (12) am Sperrbolzen (10) eingreift, die in der Entriegelungsposition (EP) des Sperrbolzens (10) dem Arretierabschnitt (A) gegenüberliegt.

4. Vorrichtung (100) nach einem der vorhergehenden Ansprüche,
**dadurch gekennzeichnet,**
**dass** der Signalgeber (32) mindestens einen Permanentmagneten (M) mit einer magnetischen Orientierung, vorzugsweise drei Permanentmagneten (M1, M2, M3) mit alternierenden magnetischen Orientierungen, aufweist,
wobei das erste Sensorelement (33) insbesondere mindestens einen, vorzugsweise zwei, Magnetfeldsensoren, bevorzugt Hallsensoren, aufweist.

5. Vorrichtung (100) nach einem der vorhergehenden Ansprüche,
**dadurch gekennzeichnet,**
**dass** die Detektionseinheit (30) mindestens ein zweites ortsfestes Sensorelement (35) zum Detektieren mindestens einer weiteren Stellung (RS, DS) des Schieberelementes (31) aufweist,
wobei sich das Schieberelement (31) insbesondere in der Ruhestellung (RS) im Detektionsbereich des zweiten Sensorelementes (35) befindet,
wobei das zweite Sensorelement (35) vorzugsweise mindestens einen Magnetfeldsensor, bevorzugt einen Hallsensor, aufweist.

6. Vorrichtung (100) nach einem der vorhergehenden Ansprüche,
**dadurch gekennzeichnet,**
**dass** das Getriebe (20) ein, vorzugsweise drehbar um eine Drehachse (D) des Getriebes (20) angetriebenes, Schaltelement (22) mit einer, vorzugsweise wendelförmigen, Steuerkurve (23) aufweist, welche mit einem korrespondierenden Steuermittel (11) des Sperrbolzens (10) zusammenwirkt, um eine Rotationsbewegung des Schaltelementes (22) in eine translatorische Bewegung des Sperrbolzens (10) entlang einer Hubrichtung (H) zwischen der Verriegelungsposition (VP) und der Entriegelungsposition (EP) zu transformieren.

7. Vorrichtung (100) nach einem der vorhergehenden Ansprüche,
**dadurch gekennzeichnet,**
**dass** das Getriebe (20) eine, vorzugsweise kurvenartige, insbesondere drehbar um eine Drehachse (D) des Getriebes (20) angetriebene, Führungskulisse (24) aufweist, die mit einem korrespondierenden Führungspin (36) des Schieberelementes (31) zusammenwirkt, um eine Rotationsbewegung der Führungskulisse (24) in eine translatorische Bewegung des Schieberelementes (31) zwischen der Ruhestellung (RS) und der Detektionsstellung (DS), vorzugsweise entlang einer Richtung (Q), die sich im Wesentlichen quer zu einer Hubrichtung (H) des Sperrbolzens (10) erstreckt, zu transformieren.

8. Vorrichtung (100) nach Anspruch 7,
**dadurch gekennzeichnet,**
**dass** die Führungskulisse (24) mit einem wachsenden Abstand (r) zu einer Drehachse (D) des Getriebes (20) zuerst einen entlang der Führungskulisse (24) beidseitig geschlossenen Führungsbereich (I), danach einen sich zu einer Seite der Führungskulisse (24) öffnenden und insbesondere breiter werdenden Eintrittsbereich (II) und danach einen entlang der Führungskulisse (24) radial einseitig offenen Stützbereich (III) für den Führungspin (36) des Schieberelementes (31) aufweist.

9. Vorrichtung (100) nach Anspruch 7 oder 8,
**dadurch gekennzeichnet,**
**dass** die Führungskulisse (24), insbesondere an einem breiter werdenden Eintrittsbereich (II), eine in eine radiale Richtung (R) weg von einer Drehachse (D) des Getriebes (20) zeigende Einfangrippe (25) aufweist, um die Überführung eines Führungspins (36) des Schieberelementes (31) aus einem entlang der Führungskulisse (24) radial einseitig offenen Stützbereich (III) in einen entlang der Führungskulisse (24) beidseitig geschlossenen Führungsbereich (I) zu unterstützen,
wobei die Einfangrippe (25) vorzugsweise in eine radiale Richtung (R) weg von einer Drehachse (D) des Getriebes (20) gesehen über den Durchmesser (d) eines Antriebsrades (21) des Getriebes (20) übersteht.

10. Vorrichtung (100) nach einem der vorhergehenden Ansprüche 7 bis 9,
**dadurch gekennzeichnet,**
**dass** der Führungspin (36) des Schieberelementes (31) mindestens eine Fangnase (N1), vorzugsweise zwei abgewickelte Fangnasen (N1, N2), aufweist, die radial, vorzugsweise in entgegengesetzte Richtungen, vom Führungspin (36) absteht bzw. abstehen und die die Überführung des Führungspins (36) des Schieberelementes (31) aus einem entlang der Führungskulisse (24) radial einseitig offenen Stützbereich (III) in einen entlang der Führungskulisse (24) beidseitig geschlossenen, vorzugsweise zwangsgeführten, Führungsbereich (I) unterstützt bzw. unterstützen.

11. Vorrichtung (100) nach einem der vorhergehenden Ansprüche,
**dadurch gekennzeichnet,**
**dass** das Getriebe (20) einen Nachlauf für den Sperrbolzen (10) gegenüber dem Schieberelement (31) beim Verlassen einer Position (VP, EP) und einen Vorauf für den Sperrbolzen (10) gegenüber dem Schieberelement (31) beim Erreichen einer Position (VP, EP) aufweist,
wobei das Getriebe (20) insbesondere einen Vorlauf für das Schieberelement (31) gegenüber dem Sperrbolzen (10) beim Verlassen einer Stellung (RS, DS) und einen Nachlauf für das Schieberelement (31) gegenüber dem Sperrbolzen (10) beim Erreichen einer Stellung (RS, DS) aufweist,
wobei das Getriebe (20) bevorzugt eine Steuerkurve (23) zum Antreiben des Sperrbolzens (10) und eine Führungskulisse (24) zum Antreiben des Schieberelementes (31) aufweist, wobei der Weg eines Steuermittels (11) des Sperrbolzens (10) über die Steuerkurve (23) vorzugsweise kürzer als der Weg eines Führungspins (36) des Schieberelementes (31) über die Führungskulisse (24) ist.

12. Verfahren zum Antreiben einer Vorrichtung (100) zum Sperren und Freigeben eines funktionswesentlichen Bauteils eines Kraftfahrzeuges, insbesondere einer Lenksäule oder eines Gangschalthebels, die
einen zwischen einer Verriegelungsposition (VP) zum Verriegeln des funktionswesentlichen Bauteils und einer Entriegelungsposition (EP) zum Entriegeln des funktionswesentlichen Bauteils bewegbar gelagerten Sperrbolzen (10),
ein Getriebe (20),
welches mit dem Sperrbolzen (10) in mechanischer Wirkverbindung steht, um den Sperrbolzen (10) zwischen der Verriegelungsposition (VP) und der Entriegelungsposition (EP) zu überführen,
und eine Detektionseinheit (30) aufweist,
welche ein Schieberelement (31) zum Bewegen eines Signalgebers (32) und mindestens ein erstes ortsfestes Sensorelement (33) zum Detektieren mindestens einer Stellung (RS, DS) des Schieberelementes (31) aufweist,
wobei das Schieberelement (31) mit dem Getriebe (20) in mechanischer Wirkverbindung steht, um das Schieberelement (31) zwischen einer Ruhestellung (RS), in welcher sich der Signalgeber (32) beabstandet vom ersten Sensorelement (33) befindet, und einer Detektionsstellung (DS), in welcher sich der Signalgeber (32) im Detektionsbereich des ersten Sensorelementes (33) befindet, zu überführen,
**dadurch gekennzeichnet,**
**dass** die Detektionseinheit (30) ein Federelement (34) aufweist, um das Schieberelement (31) mit einer Federkraft (F) aus der Ruhestellung (RS) in die Detektionsstellung (DS) zu beaufschlagen, sodass eine zweifache Absicherung bei der Überführung des Schieberelementes (31) aus der Ruhestellung (RS) in die Detektionsstellung (DS) vorgesehen ist,
wobei, sollte das Schieberelement (31) die mechanische Verbindung zum Getriebe (20) verlieren, das Federelement (34) dazu sorgt, dass das Schieberelement (31) trotz mechanischer Unterbrechungen in der Antriebskette seine Detektionsstellung (DS) sicher erreicht,
und **dass** das Verfahren folgende Schritte umfasst:
a) Entriegeln des funktionswesentlichen Bauteils und Bereitstellen eines Entriegelungssignals,
b) Entriegeln des funktionswesentlichen Bauteils ohne Bereitstellen eines Entriegelungssignals,
c) Verriegeln des funktionswesentlichen Bauteils ohne Bereitstellen eines Verriegelungssignals,
d) Verriegeln des funktionswesentlichen Bauteils und Bereitstellen eines Verriegelungssignals,
wobei zum Verriegeln des funktionswesentlichen Bauteils die Schritte a) bis d) oder zum Entriegeln des funktionswesentlichen Bauteils die Schritte d) bis a) nacheinander ausgeführt werden.

13. Verfahren nach Anspruch 12,
**dadurch gekennzeichnet,**
**dass** das Verfahren zum Antreiben einer Vorrichtung (100) nach einem der vorhergehenden Ansprüche 1 bis 11 ausgeführt wird.

## Claims

1. Device (100) for blocking and releasing an essential functional component of a motor vehicle, in particular a steering column or a gearshift lever, comprising
a locking bolt (10) movably mounted between a locking position (VP) for locking the essential functional component and an unlocking position (EP) for unlocking the essential functional component,
a gear (20),
which is in mechanical operative connection with the locking bolt (10) in order to transfer the locking bolt (10) between the locking position (VP) and the unlocking position (EP), and a detection unit (30),
which comprises a sliding element (31) for moving a signal transmitter (32) and at least one first stationary sensor element (33) for detecting at least one pose (RS, DS) of the sliding element (31),
wherein the sliding element (31) is in mechanical operative connection with the gear (20) in order to transfer the sliding element (31) between a rest pose (RS), in which the signal transmitter (32) is located at a distance from the first sensor element (33), and a detection pose (DS), in which the signal transmitter (32) is located in the detection region of the first sensor element (33),
**characterized in that**
the detection unit (30) comprises a spring element (34) for applying a spring force (F) to the sliding element (31) from the rest pose (RS) to the detection pose (DS), so that a double protection is provided when the sliding element (31) is transferred from the rest pose (RS) to the detection pose (DS),
wherein, if the sliding element (31) loses the mechanical connection to the gear (20), the spring element (34) ensures that the sliding element (31) safely reaches its detection pose (DS) despite mechanical interruptions in the drive chain.

2. Device (100) according to claim 1,
**characterized in that**
the sliding element (31) is mounted movably in translation, preferably along a direction (Q) which extends essentially transversely with respect to a stroke direction (H) of the locking bolt (10),
wherein the gear (20) in particular comprises a drive wheel (21) to provide a driving action to the locking bolt (10) and/or the sliding element (31).

3. Device (100) according to claim 1 or 2,
**characterized in that**
the sliding element (31) is located at a distance from the locking bolt (10) in the rest pose (RS), and the sliding element (31) locks the locking bolt (10) in a form- and/or force-locking manner in the detection pose (DS) when the locking bolt (10) is located in the unlocking position (EP),
wherein the sliding element (31) comprises, in particular, a locking portion (A) which, in the detection pose (DS) of the sliding element (31), engages in a corresponding recess (12) on the locking bolt (10), which is opposite the locking portion (A) in the unlocking position (EP) of the locking bolt (10).

4. Device (100) according to any one of the preceding claims,
**characterized in that**
the signal transmitter (32) comprises at least one permanent magnet (M) with a magnetic orientation, preferably three permanent magnets (M1, M2, M3) with alternating magnetic orientations,
wherein the first sensor element (33) in particular comprises at least one, preferably two, magnetic field sensors, preferably Hall sensors.

5. Device (100) according to any one of the preceding claims,
**characterized in that**
the detection unit (30) comprises at least one second stationary sensor element (35) for detecting at least one further pose (RS, DS) of the sliding element (31),
wherein the sliding element (31) is located in particular in the rest pose (RS) in the detection region of the second sensor element (35),
wherein the second sensor element (35) preferably comprises at least one magnetic field sensor, preferably a Hall sensor.

6. Device (100) according to any one of the preceding claims,
**characterized in that**
the gear (20) comprises a switching element (22), preferably driven rotatably about an axis of rotation (D) of the gear (20), with a, preferably helical, control cam (23) which interacts with a corresponding control means (11) of the locking bolt (10), to transform a rotational movement of the switching element (22) into a translational movement of the locking bolt (10) along a stroke direction (H) between the locking position (VP) and the unlocking position (EP).

7. Device (100) according to any one of the preceding claims,
**characterized in that**
the gear (20) comprises a guide slot (24), preferably in the form of a cam, in particular driven rotatably about an axis of rotation (D) of the gear (20), which interacts with a corresponding guide pin (36) of the sliding element (31) in order to transform a rotational movement of the guide slot (24) into a translational movement of the sliding element (31) between the rest pose (RS) and the detection pose (DS), preferably along a direction (Q) extending substantially transversely to a stroke direction (H) of the locking bolt (10).

8. Device (100) according to claim 7,
**characterized in that**
the guide slot (24) comprises, at an increasing distance (r) from an axis of rotation (D) of the gear (20), first a guide region (I) which is closed on both sides along the guide slot (24), then an entry region (II) which opens to one side of the guide slot (24) and, in particular, becomes wider, and then a supporting region (III) which is open radially on one side along the guide slot (24) and is intended for the guide pin (36) of the sliding element (31).

9. Device (100) according to claim 7 or 8,
**characterized in that**
the guide slot (24) comprises, in particular at an entry region (II) which becomes wider, a catching rib (25) pointing in a radial direction (R) away from an axis of rotation (D) of the gear (20), in order to support the transfer of a guide pin (36) of the sliding element (31) from a supporting region (III) which is open radially on one side along the guide slot (24) into a guide region (I) which is closed on both sides along the guide slot (24),
wherein the catching rib (25) preferably protrudes in a radial direction (R) away from an axis of rotation (D) of the gear (20) when viewed over the diameter (d) of a drive wheel (21) of the gear (20).

10. Device (100) according to any one of the preceding claims 7 to 9,
**characterized in that**
the guide pin (36) of the sliding element (31) comprises at least one catching lug (N1), preferably two unwound catching lugs (N1, N2), which protrude radially, preferably in opposite directions, from the guide pin (36), and which support the transfer of the guide pin (36) of the sliding element (31) from a support region (III) which is open radially on one side along the guide slot (24) into a guide region (I), which is closed on both sides along the guide slot (24) and is preferably forcedly guided.

11. Device (100) according to any one of the preceding claims,
**characterized in that**
the gear (20) comprises an overrun for the locking bolt (10) with respect to the sliding element (31) when leaving a position (VP, EP) and an advance for the locking bolt (10) with respect to the sliding element (31) when reaching a position (VP, EP),
wherein the gear (20) comprises, in particular, an advance for the sliding element (31) with respect to the locking bolt (10) when leaving a pose (RS, DS) and an overrun for the sliding element (31) with respect to the locking bolt (10) when reaching a pose (RS, DS), wherein the gear (20) preferably comprises a control cam (23) for driving the locking bolt (10) and a guide slot (24) for driving the sliding element (31), wherein the path of a control means (11) of the locking bolt (10) over the control cam (23) is preferably shorter than the path of a guide pin (36) of the sliding element (31) over the guide slot (24).

12. Method for driving a device (100) for blocking and releasing a functionally essential component of a motor vehicle, in particular a steering column or a gearshift lever, which comprises
a locking bolt (10) movably mounted between a locking position (VP) for locking the essential functional component and an unlocking position (EP) for unlocking the essential functional component,
a gear (20),
which is in mechanical operative connection with the locking bolt (10) in order to transfer the locking bolt (10) between the locking position (VP) and the unlocking position (EP), and a detection unit (30),
which comprises a sliding element (31) for moving a signal transmitter (32) and at least one first stationary sensor element (33) for detecting at least one pose (RS, DS) of the sliding element (31),
wherein the sliding element (31) is in mechanical operative connection with the gear (20) in order to transfer the sliding element (31) between a rest pose (RS), in which the signal transmitter (32) is located at a distance from the first sensor element (33), and a detection pose (DS), in which the signal transmitter (32) is located in the detection region of the first sensor element (33),
**characterized in that**
the detection unit (30) comprises a spring element (34) for applying a spring force (F) to the sliding element (31) from the rest pose (RS) to the detection pose (DS), so that a double protection is provided when the sliding element (31) is transferred from the rest pose (RS) to the detection pose (DS),
wherein, if the sliding element (31) loses the mechanical connection to the gear (20), the spring element (34) ensures that the sliding element (31) safely reaches its detection pose (DS) despite mechanical interruptions in the drive chain.
and that the method comprises the following steps:
a) unlocking the functionally essential component and providing an unlocking signal,
b) unlocking the functionally essential component without providing an unlocking signal,
c) locking the functionally essential component without providing a locking signal,
d) locking the functionally essential component and providing a locking signal,
wherein the steps a) to d) are carried out in succession for locking the functionally essential component or the steps d) to a) are carried out in succession for unlocking the functionally essential component.

13. Method of claim 12,
**characterized in that**
the method of driving a device (100) according to any one of the preceding claims 1 to 11 is carried out.

## Revendications

1. Dispositif (100) pour le blocage et le déblocage d'un composant fonctionnel essentiel d'un véhicule automobile, en particulier d'une colonne de direction ou d'un levier de vitesses, comprenant
un boulon de verrouillage (10) monté de manière mobile entre une position de verrouillage (VP) pour verrouiller le composant fonctionnel essentiel et une position de déverrouillage (EP) pour déverrouiller le composant fonctionnel essentiel,
une boîte de vitesses (20),
qui est en liaison fonctionnelle mécanique avec le boulon de verrouillage (10) afin de transférer le boulon de verrouillage (10) entre la position de verrouillage (VP) et la position de déverrouillage (EP),
et une unité de détection (30),
qui comprend un élément coulissant (31) pour déplacer un émetteur de signaux (32) et au moins un premier élément capteur fixe (33) pour détecter au moins une place (RS, DS) de l'élément coulissant (31),
dans lequel l'élément coulissant (31) est en liaison fonctionnelle mécanique avec la boîte de vitesses (20) afin de transférer l'élément coulissant (31) entre une place de repos (RS), dans laquelle l'émetteur de signaux (32) est situé à une distance du premier élément capteur (33), et une place de détection (DS), dans laquelle l'émetteur de signaux (32) est situé dans la zone de détection du premier élément capteur (33),
**caractérisé en ce que**
l'unité de détection (30) comprend un élément à ressort (34) afin d'appliquer une force de ressort (F) à l'élément coulissant (31) de la place de repos (RS) à la place de détection (DS), de sorte qu'une double sécurité est prévue lorsque l'élément coulissant (31) est transféré de la place de repos (RS) à la place de détection (DS),
dans lequel, si l'élément coulissant (31) perd la liaison mécanique avec la boîte de vitesses (20), l'élément à ressort (34) garantit que l'élément coulissant (31) atteint en toute sécurité sa place de détection (DS) malgré les interruptions mécaniques de la chaîne d'entraînement.

2. Dispositif (100) selon la revendication 1,
**caractérisé en ce que**
l'élément coulissant (31) est monté de manière mobile en translation, de préférence dans une direction (Q) qui s'étend essentiellement transversalement par rapport à une direction de course (H) du boulon de verrouillage (10),
dans lequel la boîte de vitesses (20) comprend en particulier une roue d'entraînement (21) destinée à assurer une action d'entraînement sur le boulon de verrouillage (10) et/ou l'élément coulissant (31).

3. Dispositif (100) selon la revendication 1 ou 2,
**caractérisé en ce que**
dans la place de repos (RS), l'élément coulissant (31) se trouve à distance du boulon de verrouillage (10), et **en ce que**, dans la place de détection (DS), l'élément coulissant (31) verrouille le boulon de verrouillage (10) par complémentarité de formes et/ou par force lorsque le boulon de verrouillage (10) est en position de déverrouillage (EP),
l'élément coulissant (31) présentant en particulier une partie de verrouillage (A) qui, dans la place de détection (DS) de l'élément coulissant (31), s'engage dans un évidement (12) correspondant du boulon de verrouillage (10) qui, dans la position de déverrouillage (EP) du boulon de verrouillage (10), est opposé à la partie de verrouillage (A).

4. Dispositif (100) selon l'une des revendications précédentes,
**caractérisé en ce que**
l'émetteur de signaux (32) comprend au moins un aimant permanent (M) d'orientation magnétique, de préférence trois aimants permanents (M1, M2, M3) d'orientations magnétiques alternées,
dans lequel le premier élément capteur (33) comprend en particulier au moins un, de préférence deux, capteurs de champ magnétique, de préférence des capteurs à effet Hall.

5. Dispositif (100) selon l'une des revendications précédentes,
**caractérisé en ce que**
l'unité de détection (30) comprend au moins un deuxième élément capteur fixe (35) pour détecter au moins une autre place (RS, DS) de l'élément coulissant (31),
dans lequel l'élément coulissant (31) est situé en particulier en place de repos (RS) dans la zone de détection du deuxième élément capteur (35),
dans lequel le deuxième élément capteur (35) comprend de préférence au moins un capteur de champ magnétique, de préférence un capteur à effet Hall.

6. Dispositif (100) selon l'une des revendications précédentes,
**caractérisé en ce que**
la boîte de vitesses (20) comprend un élément de commutation (22) qui est de préférence entraîné en rotation autour d'un axe de rotation (D) de la boîte de vitesses (20) et comprend une came de commande (23), de préférence hélicoïdale, qui coopère avec un moyen de commande (11) correspondant du boulon de verrouillage (10) afin de transformer un mouvement de rotation de l'élément de commutation (22) en un mouvement de translation du boulon de verrouillage (10) le long d'une direction de course (H) entre la position de verrouillage (VP) et la position de déverrouillage (EP).

7. Dispositif (100) selon l'une des revendications précédentes,
**caractérisé en ce que**
la boîte de vitesses (20) comprend une fente de guidage (24), de préférence en forme de came, en particulier entraînée en rotation autour d'un axe de rotation (D) de la boîte de vitesses (20), qui coopère avec une broche de guidage (36) correspondante de l'élément coulissant (31) afin de transformer un mouvement de rotation de la fente de guidage (24) en un mouvement de translation de l'élément coulissant (31) entre la place de repos (RS) et la place de détection (DS), de préférence le long d'une direction (Q) s'étendant essentiellement transversalement à une direction de course (H) du boulon de verrouillage (10).

8. Dispositif (100) selon la revendication 7,
**caractérisé en ce que**
la fente de guidage (24) comprend, à une distance (r) croissante d'un axe de rotation (D) de la boîte de vitesses (20), d'abord une zone de guidage (I) fermée des deux côtés le long de la fente de guidage (24), puis une zone d'entrée (II) qui s'ouvre d'un côté de la fente de guidage (24) et qui s'élargit en particulier, et ensuite une zone d'appui (III) ouverte radialement d'un côté le long de la fente de guidage (24) et destinée à la broche de guidage (36) de l'élément coulissant (31).

9. Dispositif (100) selon la revendication 7 ou 8,
**caractérisé en ce que**
la fente de guidage (24) comprend, en particulier dans une zone d'entrée (II) qui s'élargit, une nervure de capture (25) orientée dans une direction radiale (R) s'éloignant d'un axe de rotation (D) de la boîte de vitesses (20), afin de favoriser le transfert d'une broche de guidage (36) de l'élément coulissant (31) d'une zone d'appui (III) ouverte radialement d'un côté le long de la fente de guidage (24) dans une zone de guidage (I) fermée des deux côtés le long de la fente de guidage (24),
dans lequel la nervure de capture (25) fait de préférence saillie dans une direction radiale (R) en s'éloignant d'un axe de rotation (D) de la boîte de vitesses (20) au-delà du diamètre (d) d'une roue d'entraînement (21) de la boîte de vitesses (20).

10. Dispositif (100) selon l'une des revendications précédentes 7 à 9,
**caractérisé en ce que**
la broche de guidage (36) de l'élément coulissant (31) comprend au moins une patte d'arrêt (N1), de préférence deux pattes d'arrêt déroulées (N1, N2), qui fait saillie radialement, de préférence dans des directions opposées, par rapport à la broche de guidage (36), et qui soutient le transfert de la broche de guidage (36) de l'élément coulissant (31) d'une zone d'appui (III) ouverte radialement d'un côté le long de la fente de guidage (24), dans une zone de guidage (I) fermée des deux côtés le long de la fente de guidage (24) et qui est de préférence guidée positivement.

11. Dispositif (100) selon l'une des revendications précédentes,
**caractérisé en ce que**
la boîte de vitesses (20) comprend un dépassement pour le boulon de verrouillage (10) par rapport à l'élément coulissant (31) lorsqu'il quitte une position (VP, EP) et une avance pour le boulon de verrouillage (10) par rapport à l'élément coulissant (31) lorsqu'il atteint une position (VP, EP),
dans lequel la boîte de vitesses (20) comprend en particulier une avance pour l'élément coulissant (31) par rapport au boulon de verrouillage (10) lorsqu'il quitte une place (RS, DS) et un dépassement pour l'élément coulissant (31) par rapport au boulon de verrouillage (10) lorsqu'il atteint une place (RS, DS),
dans lequel la boîte de vitesses (20) comprend de préférence une came de commande (23) pour l'entraînement du boulon de verrouillage (10) et une fente de guidage (24) pour l'entraînement de l'élément coulissant (31), dans lequel le trajet d'un moyen de commande (11) du boulon de verrouillage (10) sur la came de commande (23) est de préférence plus court que le trajet d'une broche de guidage (36) de l'élément coulissant (31) sur la fente de guidage (24).

12. Procédé pour l'entraînement d'un dispositif (100) pour le blocage et le déblocage d'un composant fonctionnel essentiel d'un véhicule automobile, en particulier d'une colonne de direction ou d'un levier de vitesses, comprenant
un boulon de verrouillage (10) monté de manière mobile entre une position de verrouillage (VP) pour verrouiller le composant fonctionnel essentiel et une position de déverrouillage (EP) pour déverrouiller le composant fonctionnel essentiel,
une boîte de vitesses (20),
qui est en liaison fonctionnelle mécanique avec le boulon de verrouillage (10) afin de transférer le boulon de verrouillage (10) entre la position de verrouillage (VP) et la position de déverrouillage (EP),
et une unité de détection (30),
qui comprend un élément coulissant (31) pour déplacer un émetteur de signaux (32) et au moins un premier élément capteur fixe (33) pour détecter au moins une place (RS, DS) de l'élément coulissant (31),
dans lequel l'élément coulissant (31) est en liaison fonctionnelle mécanique avec la boîte de vitesses (20) afin de transférer l'élément coulissant (31) entre une place de repos (RS), dans laquelle l'émetteur de signaux (32) est situé à une distance du premier élément capteur (33), et une place de détection (DS), dans laquelle l'émetteur de signaux (32) est situé dans la zone de détection du premier élément capteur (33),
**caractérisé en ce que**
l'unité de détection (30) comprend un élément à ressort (34) afin d'appliquer une force de ressort (F) à l'élément coulissant (31) de la place de repos (RS) à la place de détection (DS), de sorte qu'une double sécurité est prévue lorsque l'élément coulissant (31) est transféré de la place de repos (RS) à la place de détection (DS),
dans lequel, si l'élément coulissant (31) perd la liaison mécanique avec la boîte de vitesses (20), l'élément à ressort (34) garantit que l'élément coulissant (31) atteint en toute sécurité sa place de détection (DS) malgré les interruptions mécaniques de la chaîne d'entraînement.
et que le procédé comprend les étapes suivantes :
a) déverrouiller le composant fonctionnellement essentiel et fournir un signal de déverrouillage,
b) déverrouiller le composant fonctionnellement essentiel sans fournir de signal de déverrouillage,
c) verrouiller le composant fonctionnellement essentiel sans fournir de signal de verrouillage,
d) verrouiller le composant fonctionnellement essentiel et fournir un signal de verrouillage,
dans lequel les étapes a) à d) sont exécutées successivement pour verrouiller le composant fonctionnellement essentiel ou les étapes d) à a) sont exécutées successivement pour déverrouiller le composant fonctionnellement essentiel.

13. Procédé selon la revendication 12,
**caractérisé en ce que**
le procédé pour l'entraînement d'un appareil (100) selon l'une des revendications 1 à 11 précédentes est effectuée.
